# EUROPEAN PATENT SPECIFICATION

(11) **EP 2 960 431 B1**
(45) Date of publication and mention of the grant of the patent: **08.03.2017**
(21) Application number: 15166328.3
(22) Date of filing: 05.05.2015
(51) Int. Cl.: F01D 5/00

(54) **SYSTEMS AND METHODS FOR REPAIRING A SURFACE OF DAMAGED METAL COMPONENTS**
SYSTEME UND VERFAHREN ZUR REPARATUR DER OBERFLÄCHE BESCHÄDIGTER METALLKOMPONENTEN
SYSTÈMES ET PROCÉDÉS DE RÉPARATION D'UNE SURFACE DE COMPOSANTS MÉTALLIQUES ENDOMMAGÉS

(30) Priority: 09.05.2014 US 201461991303 P
(43) Date of publication of application: 30.12.2015
(73) Proprietor: United Technologies Corporation, Farmington, CT 06032 (US)
(72) Inventor: Belanger, Philip, Acton, ME Maine 04001 (US); Hayford, Richard, Cape Neddick, ME Maine 03902-7308 (US); Lutjen, Paul, Kennebunkport, ME Maine 04046 (US)
(74) Representative: de Bresser, Sara Jean

(56) References cited:
- EP-A1- 1 528 117
- EP-A2- 2 495 397
- WO-A1-2005/035819
- DE-A1-102006 028 297
- US-A- 5 908 516

## Description

### FIELD

The present disclosure relates to the repair of components, such as seals, within gas turbine engines, and more particularly to the repair of portions of a blade outer air seal assembly ("BOAS" assembly) located within a gas turbine engine.

### BACKGROUND

Gas turbine engines generally include a compressor to pressurize inflowing air, a combustor to burn a fuel in the presence of the pressurized air, and a turbine to extract energy from the resulting combustion gases. The turbine may include multiple rotatable turbine blade arrays separated by multiple stationary vane arrays. A turbine blade array may be disposed radially inward of an annular BOAS assembly. Frequently, portions of the BOAS assembly-such as seals within the assembly-may be damaged, e.g., by oxidation erosion. DE 10 2006 028297 discloses a method for reparing run-in coatings which involves filling in a damaged place with a filling-in material, depositing a donor diffusion layer over the filled-in material and diffusing a metal from the donor layer into the filled-in material. EP 2495397 discloses a method for repairing turbine components comprising machining the component to remove the distressed portion and rebuilding the component using an additive manufacturing process.

### SUMMARY

A method for repairing a damaged component comprising applying a repair material comprising an additive material on to the surface of a damaged portion of a metal component, applying a layer of diffusive metal material to a surface of the repair material, applying heat to the layer of diffusive metal material to bond the repair material to the metal component, allowing the additive material of the repair material to diffuse at least partially into the layer of second metal material, and removing the layer of diffusive metal material. The repair material may comprise a first material and an additive material. The diffusive material may comprise a layer, sheet, or other relatively flat configuration. The repair material may comprise a first material and a second material, the second material having a melting point that is lower than the first material. The repair material may comprise a cobalt or nickel-boron composition. The repair material may have a melting point that is approximately 40 degrees Fahrenheit (22°C) lower than the melting point of the damaged component.

A system for repairing a damaged component comprising a metal component having a damaged portion and comprising a first metal material, a repair material comprising an additive, and a layer of second metal material, wherein the additive of the repair material is capable of diffusing into the layer of second metal material, and wherein the first metal material of the metal component melts at a first temperature and the repair material melts at a second temperature that is lower than the first temperature. The repair material may comprise a cobalt or nickel-boron composition. Further, the repair material may have a melting point that is approximately 40 degrees Fahrenheit (22°C) lower than the melting point of the first metal material of the metal component. The layer of second metal material may comprise the first metal material of the metal component.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
Figure 1A illustrates, in accordance with various embodiments, a cross-sectional view of a jet engine;
Figure 1B illustrates, in accordance with various embodiments, a cross-sectional view of a turbine portion of a jet engine;
Figure 1C illustrates, in accordance with various embodiments, a perspective view of a segment of a BOAS assembly having a damaged sealing interface;
Figure 1D illustrates, in accordance with various embodiments, a perspective view of a damaged sealing interface;
Figure 2A illustrates, in accordance with various embodiments, a preform;
Figures 2B and 2C illustrate, in accordance with various embodiments, a perspective view of a portion of a BOAS assembly having a sealing interface that has been repaired; and
Figure 3 illustrates, in accordance with various embodiments, a method for repairing a damaged portion of the ID surface.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the inventions, it should be understood that other embodiments may be realized and that logical and mechanical changes may be made without departing from the scope of the inventions. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option.

In addition, although the description provided herein may focus on a particular aircraft component (e.g., a sealing interface comprising a portion of a BOAS assembly), those of ordinary skill will appreciate that the methods and techniques for repairing damaged components may apply to a wide variety of components.

As used herein, "aft" refers to the direction associated with the tail (e.g., the back end) of an aircraft, or generally, to the direction of exhaust of the gas turbine. As used herein, "forward" refers to the directed associated with the nose (e.g., the front end) of an aircraft, or generally, to the direction of flight or motion.

Jet engines often include one or more stages of BOAS and vane assemblies. Each BOAS and vane assembly may comprise one or more sections or segments. A segment of a BOAS assembly may be disposed radially outward of a turbine blade and/or a plurality of turbine blades relative to an engine axis. A BOAS assembly may thus comprise an annular structure comprising a plurality of BOAS assembly segments, each BOAS assembly segment disposed radially about one or more of a plurality of turbine blades, each of which may rotate, during operation, within the BOAS assembly.

Each BOAS segment may couple to an adjacent BOAS segment to form the annular BOAS assembly described above by way of a plurality of sealing interfaces. Over time, some of these sealing interfaces may erode or otherwise wear away (e.g., via an oxidation erosion process) such that a seal formed between one or more consecutive BOAS segments may fail to contain the pressure and temperature of the combustion gasses within the high pressure turbine. This loss of pressure may result, in addition to damage to the BOAS assembly, in a loss of fuel efficiency.

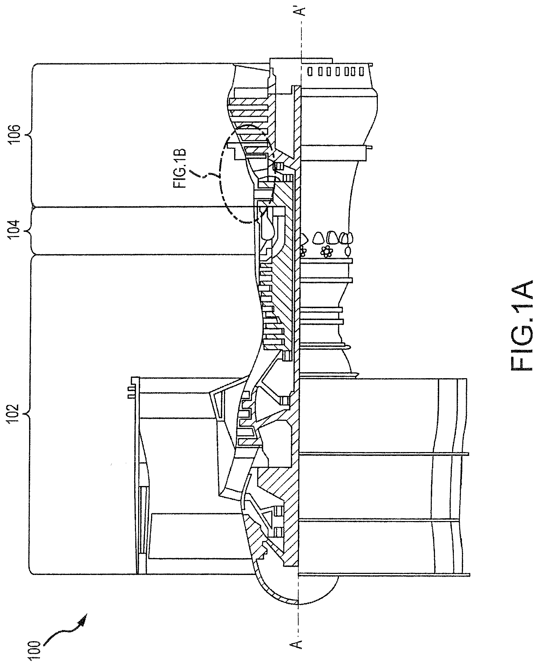

Accordingly, with reference to Figure 1A, a jet engine (e.g., a gas turbine engine) 100 is shown. The jet engine 100 may extend, from forward to aft, along the central axis marked A-A'. In general terms, a jet engine may comprise a compressor section 102, a combustion chamber 104, and a turbine section 106. Air may flow through the compressor section 102 (which may comprise a plurality of compressor blades) and into the combustion chamber 104, where the air is mixed with a fuel source and may be ignited to produce hot combustion gasses. These hot combustion gasses may drive a series of turbine blades within the turbine section 106, which in turn drive, for example, one or more compressor section blades mechanically coupled thereto.

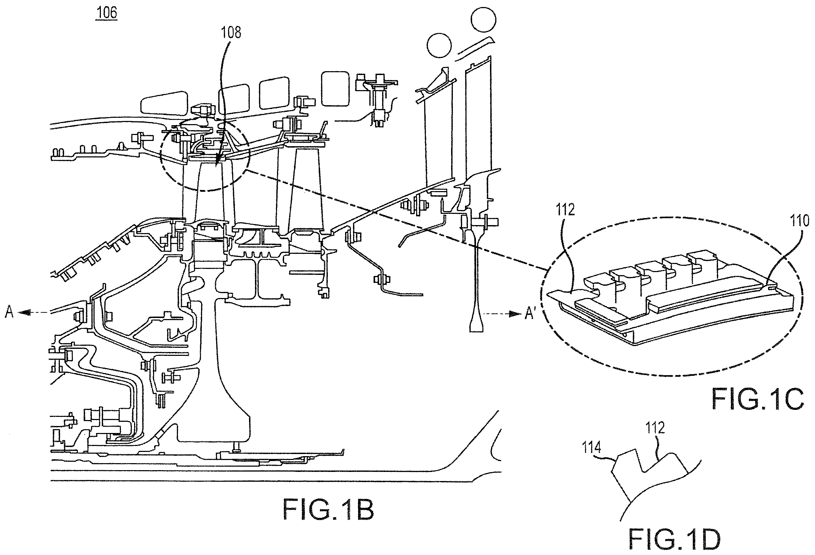

Figure 1B shows an area within the turbine section 106 that includes a BOAS assembly 108. The BOAS assembly 108 may comprise a plurality of BOAS segments 110, as described above and as shown, at Figure 1C. Each segment 110 may couple to an adjacent segment to form an annular BOAS assembly that is concentrically situated about a plurality of turbine blades, each radially extending away from the axis A-A'.

As described above, and as shown with respect to Figure 1C, a BOAS segment 110 may comprise a sealing interface 112. The sealing interface 112 may erode over time (e.g., where the sealing interface 112 comprises cobalt or nickel, via an oxidation erosion process), such that the interface may form an incomplete seal with an adjacent sealing interface (e.g., comprising an adjacent BOAS segment).

As illustrated in Figure 1D, sealing interface 112 may comprise a damaged portion 114. In various embodiments, damaged portion 114 may comprise an edge or a surface of the sealing interface 112 which has eroded or abraded away such that the sealing interface is incomplete or altered from its original form. As this occurs, air may bleed from the turbine during operation, resulting in a loss of efficiency.

The damaged portion 114 of sealing interface 112 may, in various embodiments, be repaired by restoring or replacing the eroded or lost material with a repair material. For example, as will be discussed below, a repair material may applied to a portion or all of the surface of damaged portion 114 to restore and/or repair sealing interface 112.

In general, a repair material may comprise a combination of two or more materials. For example, in various embodiments, a repair material may comprise a first material and an additive material, which may lower the melting temperature of the parent material. In various embodiments, the first material may comprise the same material as the metal component being repaired, also referred to as the "parent material." For example, in various embodiments, the first material (as well as the parent material of sealing interface 112) may comprise cobalt or nickel, while the additive material may comprise boron. In various embodiments, the additive may comprise any material capable of lowering the melting temperature of the repair material. The additive material, such as boron, may lower the melting temperature of the repair material by from about 10 to 60 degrees Fahrenheit (6 to 33°C). In various embodiments, the additive material is capable of lowering the melting temperature of the repair material by between about 20 to 50 degrees Fahrenheit (11 to 28°C), and may lower the melting temperature by about 40 degrees Fahrenheit (22°C). Further, the repair material may comprise a variety of binders and other inclusions such as, for example, a paste, a powder, and/or the like.

Typically, for the first material within the repair material to form a metallurgical bond with the parent material of the sealing interface 112, it is necessary that the additive material (e.g., boron) leach or diffuse into the parent material of the sealing interface 112. Thus, although the application of repair material to a damaged portion of a sealing interface may repair the portion, the melting temperature of the repaired portion may also be reduced by the diffusion of boron to the parent material.

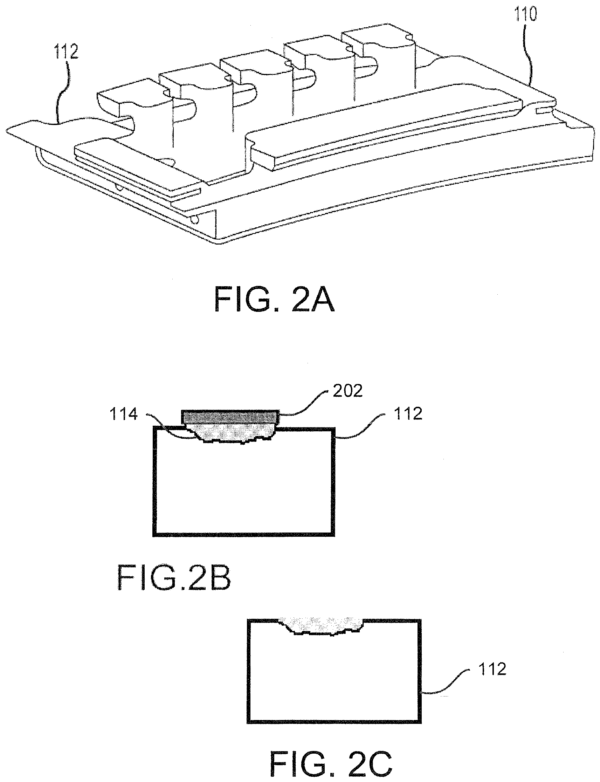

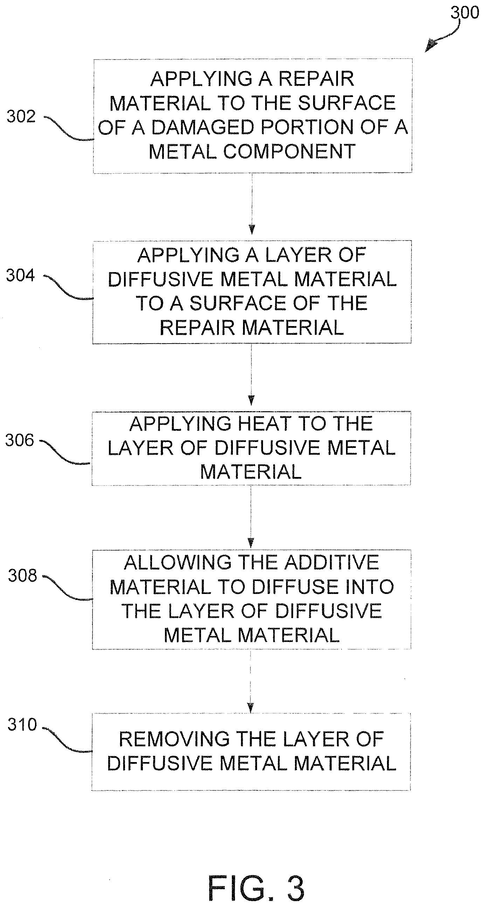

With reference to Figures 2A, 2B, and 3 (describing a repair method 300), a damaged portion 114 may be repaired in a manner which may prevent or reduce the effect described above. For example, damaged portion 114 may comprise a portion of a surface of sealing interface 112 that has sustained damage due to oxidation erosion.

In various embodiments, step 302 of repair method 300 may comprise applying repair material to a surface of damaged portion 114 of sealing interface 112. The repair material may, for example, form a layer that has the same profile (or is larger) than the original, undamaged shape and configuration of damaged portion 114. In various embodiments, step 302 may comprise applying repair material to the surface of damaged portion 114 at a thickness of less than or equal to about 0.40 inches or 10 millimeters.

Step 304 of repair method 300 may comprise, for example, applying a layer of diffusive metal material 202 to a surface of the repair material of step 302. In such embodiments, diffusive metal material 202 comprises a metal capable of receiving the additive material of the repair material. For example, the additive material may diffuse into layer of diffusive metal material 202 rather than the parent material of damaged portion 114 of sealing interface 112. As such, layer of diffusive metal material 202 may operate as a sacrificial material by receiving additive material from the repair material, then being removed before the sealing interface 112 is returned to service in an aircraft.

In various embodiments and with reference to Figure 2B, step 306 of repair method 300 may comprise applying heat to layer of diffusive metal material 202. As layer of diffusive metal material 202 is heated to the melting temperature of the repair material (which, again, may be approximately 40 degrees Fahrenheit (22°C) lower than the melting point of the parent material of sealing interface 112 and/or layer of diffusive metal material 202), the first material of the repair material may melt to form a metallurgical bond between the repair material and the sealing interface 112, while the additive material (e.g., boron) may diffuse into layer of diffusive metal material 202. Thus, repaired sealing interface 112 may retain its original melting point and temperature resistance.

Step 308 of repair method 300 may comprise, for example, allowing the additive material of the repair material to diffuse at least partially into the layer of diffusive metal material. As previously discussed, excessive diffusion of the additive material into the parent material of sealing interface 112 may reduce the melting point of sealing interface 112. Further, if insufficient additive material diffuses out of the repair material that is bonded to the surface of sealing interface 112, the portion of sealing interface 112 repaired by the repair material will also comprise a reduced melting point. Therefore, allowing adequate time for a sufficient amount of the additive material to diffuse into layer of diffusive metal material 202 may minimize the reduction of melting point in repaired sealing interface 112.

In various embodiments and with reference to Figure 2C, step 310 of repair method 300 comprises removing layer of diffusive metal material 202 from sealing interface 112. In various embodiments, layer of diffusive metal material 202 is machined away from the surface of sealing interface 112, leaving behind only the repair material bonded to the surface of the repaired sealing interface 112.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for repairing a metal component comprising:
applying a repair material comprising an additive material on to a surface of a damaged portion (114) of the metal component;
applying a layer of diffusive metal material (202) to a surface of the repair material;
applying heat to the layer of diffusive metal material (202) to bond the repair material to the metal component;
allowing the additive material of the repair material to diffuse at least partially into the layer of diffusive metal material (202); and
removing the layer of diffusive metal material (202).

2. The method of claim 1, wherein the repair material comprises a same material as the metal component.

3. The method of claim 1 or 2, wherein the step of removing the layer of diffusive metal material (202) comprises machining the layer of diffusive metal material (202).

4. The method of claim 1 wherein said metal component is a surface of a blade outer air seal (108), said method comprising:
applying said repair material on to the surface of the blade outer air seal (108), wherein the additive material is capable of lowering the melting point of the repair material between 6 to 33°C (10 to 60 degrees Fahrenheit);
applying said layer of diffusive metal material (202) to a surface of the repair material, wherein the layer of diffusive metal material (202) comprises a same material as the surface of the blade outer air seal (108);
applying heat to the layer of diffusive metal material (202) to bond the repair material to the surface of the blade outer air seal (108);
allowing the additive material of the repair material to diffuse at least partially into the layer of diffusive metal material (202); and
machining the layer of diffusive metal material (202) from the surface of the blade outer air seal (108).

5. The method of any preceding claim, wherein the heat applied to the repair material is 22°C (40 degrees Fahrenheit) less than the melting point of the metal component or the material comprising the surface of the blade outer air seal (108).

6. The method of any preceding claim, wherein the step of applying the repair material comprises applying a layer of the repair material having a thickness less than 10 millimeters (0.040 inches).

7. The method of any preceding claim, wherein the layer of diffusive metal material (202) comprises a metal material capable of receiving the additive material.

8. A system for repairing a metal component comprising:
the metal component having a damaged portion (114) and comprising a first metal material;
a repair material comprising an additive material; and
a layer of diffusive metal material (202), wherein the additive material of the repair material is capable of diffusing into the layer of diffusive metal material (202), and wherein the first metal material of the metal component melts at a first temperature and the repair material melts at a second temperature that is lower than the first temperature.

9. The system of claim 8, wherein the repair material comprises cobalt or nickel.

10. The system of claim 8 or 9, wherein the repair material has a melting point that is 22°C (40 degrees Fahrenheit) lower than the melting point of the first metal material of the metal component.

11. The system of claim 8, 9 or 10, wherein the layer of diffusive metal material (202) comprises the first metal material of the metal component.

12. The system of any of claims 8 to 11, wherein the repair material comprises the first metal material of the metal component.

13. The system of any of claims 8 to 12, wherein repair material comprises a layer having a thickness less than 10 millimeters (0.040 inches).

14. The method or system of any preceding claim, wherein the additive material comprises a material capable of lowering the melting point of the repair material between 6 to 33°C (10 to 60 degrees Fahrenheit).

15. The method or system of any preceding claim, wherein the additive material comprises boron.

## Patentansprüche

1. Verfahren zum Reparieren einer Metallkomponente, umfassend:
Aufbringen eines Reparaturmaterials, das ein Zusatzmaterial umfasst, auf eine Oberfläche eines beschädigten Abschnitts (114) der Metallkomponente;
Aufbringen einer Schicht von diffusivem Metallmaterial (202) auf eine Oberfläche des Reparaturmaterials;
Anwenden von Wärme auf die Schicht von diffusivem Metallmaterial (202), um das Reparaturmaterial mit der Metallkomponente zu verbinden;
Zulassen, dass das Zusatzmaterial des Reparaturmaterials wenigstens teilweise in die Schicht von diffusivem Metallmaterial (202) diffundiert; und
Entfernen der Schicht von diffusivem Metallmaterial (202).

2. Verfahren nach Anspruch 1, wobei das Reparaturmaterial ein gleiches Material wie die Metallkomponente umfasst.

3. Verfahren nach Anspruch 1 oder 2, wobei der Schritt des Entfernens der Schicht von diffusivem Metallmaterial (202) das Bearbeiten der Schicht von diffusivem Metallmaterial (202) umfasst.

4. Verfahren nach Anspruch 1, wobei die Metallkomponente eine Oberfläche einer Schaufelaußenluftdichtung (108) ist, wobei das Verfahren Folgendes umfasst:
Aufbringen des Reparaturmaterials auf die Oberfläche der Schaufelaußenluftdichtung (108), wobei das Zusatzmaterial in der Lage ist, den Schmelzpunkt des Reparaturmaterials um zwischen 6 bis 33 °C (10 bis 60 Grad Fahrenheit) zu senken;
Aufbringen der Schicht von diffusivem Metallmaterial (202) auf eine Oberfläche des Reparaturmaterials, wobei die Schicht von diffusivem Metallmaterial (202) ein gleiches Material wie die Oberfläche der Schaufelaußenluftdichtung (108) umfasst;
Anwenden von Wärme auf die Schicht von diffusivem Metallmaterial (202), um das Reparaturmaterial mit der Oberfläche der Schaufelaußenluftdichtung (108) zu verbinden;
Zulassen, dass das Zusatzmaterial des Reparaturmaterials wenigstens teilweise in die Schicht von diffusivem Metallmaterial (202) diffundiert; und
Bearbeiten der Schicht von diffusivem Metallmaterial (202) von der Oberfläche der Schaufelaußenluftdichtung (108).

5. Verfahren nach einem der vorangehenden Ansprüche, wobei die auf das Reparaturmaterial angewandte Wärme 22 °C (40 Grad Fahrenheit) geringer als der Schmelzpunkt der Metallkomponente oder des Materials ist, das die Oberfläche der Schaufelaußenluftdichtung (108) ausmacht.

6. Verfahren nach einem der vorangehenden Ansprüche, wobei der Schritt des Aufbringens des Reparaturmaterials das Aufbringen einer Schicht des Reparaturmaterials umfasst, die eine Dicke von weniger als 10 Millimetern (0,040 Zoll) aufweist.

7. Verfahren nach einem der vorangehenden Ansprüche, wobei die Schicht von diffusivem Metallmaterial (202) ein Metallmaterial umfasst, das in der Lage ist, das Zusatzmaterial aufzunehmen.

8. System zum Reparieren einer Metallkomponente, umfassend:
die Metallkomponente, die einen beschädigten Abschnitt (114) aufweist und ein erstes Metallmaterial umfasst;
ein Reparaturmaterial, das ein Zusatzmaterial umfasst; und
eine Schicht von diffusivem Metallmaterial (202), wobei das Zusatzmaterial des Reparaturmaterials in der Lage ist, in die Schicht von diffusivem Metallmaterial (202) zu diffundieren, und wobei das erste Metallmaterial der Metallkomponente bei einer ersten Temperatur schmilzt und das Reparaturmaterial bei einer zweiten Temperatur schmilzt, die niedriger als die erste Temperatur ist.

9. System nach Anspruch 8, wobei das Reparaturmaterial Kobalt oder Nickel umfasst.

10. System nach Anspruch 8 oder 9, wobei das Reparaturmaterial einen Schmelzpunkt aufweist, der 22 °C (40 Grad Fahrenheit) niedriger als der Schmelzpunkt des ersten Metallmaterials der Metallkomponente ist.

11. System nach Anspruch 8, 9 oder 10, wobei die Schicht von diffusivem Metallmaterial (202) das erste Metallmaterial der Metallkomponente umfasst.

12. System nach einem der Ansprüche 8 bis 11, wobei das Reparaturmaterial das erste Metallmaterial der Metallkomponente umfasst.

13. System nach einem der Ansprüche 8 bis 12, wobei das Reparaturmaterial eine Schicht umfasst, die eine Dicke von weniger als 10 Millimetern (0,040 Zoll) aufweist.

14. Verfahren oder System nach einem der vorangehenden Ansprüche, wobei das Zusatzmaterial ein Material umfasst, das in der Lage ist, den Schmelzpunkt des Reparaturmaterials um zwischen 6 bis 33 °C (10 bis 60 Grad Fahrenheit) zu senken.

15. Verfahren oder System nach einem der vorangehenden Ansprüche, wobei das Zusatzmaterial Bor umfasst.

## Revendications

1. Procédé de réparation d'un composant métallique comprenant :
l'application d'un matériau de réparation comprenant un matériau additif sur une surface d'une partie endommagée (114) du composant métallique ;
l'application d'une couche de matériau métallique diffus (202) sur une surface du matériau de réparation ;
l'application de la chaleur sur la couche de matériau métallique diffus (202) pour lier le matériau de réparation au composant métallique ;
la permission du matériau additif du matériau de réparation de diffuser au moins en partie dans la couche de matériau métallique diffus (202) ; et
le retrait de la couche de matériau métallique diffus (202).

2. Procédé selon la revendication 1, dans lequel le matériau de réparation comprend un même matériau que le composant métallique.

3. Procédé selon la revendication 1 ou 2, dans lequel l'étape de retrait de la couche de matériau métallique diffus (202) comprend l'usinage de la couche de matériau métallique diffus (202).

4. Procédé selon la revendication 1, dans lequel ledit composant métallique est une surface d'un joint d'air extérieur de lame (108), ledit procédé comprenant :
l'application dudit matériau de réparation sur la surface du joint d'air extérieur de lame (108),
dans lequel le matériau additif est capable d'abaisser le point de fusion du matériau de réparation entre 6 et 33 °C (10 à 60 degrés Fahrenheit) ;
l'application de ladite couche de matériau métallique diffus (202) sur une surface du matériau de réparation, dans lequel la couche de matériau métallique diffus (202) comprend un même matériau que la surface du joint d'air extérieur de lame (108) ;
l'application de la chaleur sur la couche de matériau métallique diffus (202) pour lier le matériau de réparation à la surface du joint d'air extérieur de lame (108) ;
la permission du matériau additif du matériau de réparation de diffuser au moins en partie dans la couche de matériau métallique diffus (202) ; et
l'usinage de la couche de matériau métallique diffus (202) depuis la surface du joint d'air extérieur de lame (108).

5. Procédé selon une quelconque revendication précédente, dans lequel la chaleur appliquée au matériau de réparation est de 22 °C (40 degrés Fahrenheit) inférieure au point de fusion du composant métallique ou du matériau comprenant la surface du joint d'air extérieur de lame (108).

6. Procédé selon une quelconque revendication précédente, dans lequel l'étape d'application du matériau de réparation comprend l'application d'une couche du matériau de réparation présentant une épaisseur inférieure à 10 millimètres (0,040 pouce).

7. Procédé selon une quelconque revendication précédente, dans lequel la couche de matériau métallique diffus (202) comprend un matériau métallique capable de recevoir le matériau additif.

8. Système de réparation d'un composant métallique comprenant :
le composant métallique présentant une partie endommagée (114) et comprenant un premier matériau métallique ; un matériau de réparation comprenant un matériau additif ; et
une couche de matériau métallique diffus (202), dans lequel le matériau additif du matériau de réparation est capable de diffuser dans la couche de matériau métallique diffus (202), et dans lequel le premier matériau métallique du composant métallique fond à une première température et le matériau de réparation fond à une seconde température qui est inférieure à la première température.

9. Système selon la revendication 8, dans lequel le matériau de réparation comprend du cobalt ou du nickel.

10. Système selon la revendication 8 ou 9, dans lequel le matériau de réparation a un point de fusion qui est de 22 °C (40 degrés Fahrenheit) inférieur au point de fusion du premier matériau métallique du composant métallique.

11. Système selon la revendication 8, 9 ou 10, dans lequel la couche de matériau métallique diffus (202) comprend le premier matériau métallique du composant métallique.

12. Système selon l'une quelconque des revendications 8 à 11, dans lequel le matériau de réparation comprend le premier matériau métallique du composant métallique.

13. Système selon l'une quelconque des revendications 8 à 12, dans lequel le matériau de réparation comprend une couche présentant une épaisseur inférieure à 10 millimètres (0,040 pouce).

14. Procédé ou système selon une quelconque revendication précédente, dans lequel le matériau additif comprend un matériau capable d'abaisser le point de fusion du matériau de réparation entre 6 et 33 °C (10 et 60 degrés Fahrenheit).

15. Procédé ou système selon une quelconque revendication précédente, dans lequel le matériau additif comprend du bore.
